Europäisches Patentamt

European Patent Office

Office européen des brevets

(19)

(11) EP 0 753 977 B1

(12) **EUROPÄISCHE PATENTSCHRIFT**

(45) Veröffentlichungstag und Bekanntmachung des Hinweises auf die Patenterteilung:
**12.01.2005 Patentblatt 2005/02**

(51) Int Cl.7: **H04Q 7/36**

(21) Anmeldenummer: **96110730.7**

(22) Anmeldetag: **03.07.1996**

(54) **Verfahren zur Zuweisung einer Frequenz zu einer Sende-/Empfangseinrichtung**

Frequency allocation method to transmitter/receiver device

Méthode d'allocation de fréquences à un émetteur/récepteur

(84) Benannte Vertragsstaaten:
**AT BE CH FR GB IT LI**

(30) Priorität: **12.07.1995 DE 19525128**

(43) Veröffentlichungstag der Anmeldung:
**15.01.1997 Patentblatt 1997/03**

(73) Patentinhaber: **T-Mobile Deutschland GmbH**
**53227 Bonn (DE)**

(72) Erfinder: **Plehn. Jürgen, Dr.**
**53115 Bonn (DE)**

(74) Vertreter: **Struck, Norbert, Dr.**
**Forschungszentrum Jülich GmbH,**
**RPA-PT**
**52425 Jülich (DE)**

(56) Entgegenhaltungen:
**DE-A- 4 302 228**     **GB-A- 2 266 433**

**Beschreibung**

Die Erfindung bezieht sich auf ein Verfahren zur Zuweisung einer Frequenz oder eines Frequenzbandes zu einer Sende- und/ oder Empfangseinrichtung eines Funknetzes.

Ein Funknetz besteht aus einer Mehrzahl an Sende- und/ oder Empfangseinrichtungen. Die Einrichtungen übermitteln Informationen per Funk. Zur Erfüllung dieser Funktion sind jeder Einrichtung bestimmte ausgewählte Frequenzen oder ausgewählte Bandbreiten an Frequenzen zugewiesen, mit denen sie senden und/ oder empfangen. Ein Beispiel für derartige Netze sind Sendeeinrichtungen für Radio- und Fernsehübertragungen, ein anderes Beispiel sind Basisstationen oder Funkfeststationen für mobiles Telefonieren. Verfahren zur Zuweisung von Frequenzen zu Sende-/ Empfangseinrichtungen sind aus Globecom, Bd. 2, Dezember 1985, New Orleans Seiten 997 bis 1001 sowie aus DE 43 02 228 A1 bekannt.

Gemäß Globecom, Bd. 2, Dezember 1985, New Orleans wird eine Zelle (Sende- und/oder Empfangseinrichtung) mittels eines Zellauswahlkriteriums sowie ein Kanal (Frequenz oder Frequenzband) mittels eines Kanalauswahlkriteriums ausgewählt. Der ausgewählten Zelle wird der ausgewählte Kanal zugewiesen.

Aus DE 43 02 228 A1 ist bekannt, eine Basisstation (Sende- und/ oder Empfangseinrichtung) sowie eine Frequenz mittels einer Vielzahl von Auswahlkriterien auszuwählen und entsprechend der Auswahl die Zuweisung vorzunehmen.

Die bekannten Auswahlkriterien ermitteln Frequenzen bzw. Basisstationen mit der vorrangigen Zielsetzung, Störungen im Funknetz zu minimieren, die durch Interferenzerscheinungen zwischen mehreren Frequenzen hervorgerufen werden. Zweitrangig wird berücksichtigt, welche Auswirkungen eine derartige Qualitätsoptimierung auf die Kapazität des Netzes hat. (Unter Kapazität ist die Summe der zugewiesenen Frequenzen im Netz für den Fall zu verstehen, daß das jeweils angewendete Zuweisungsverfahren keine weitere Zuweisung mehr zuläßt.) Es kann jedoch für den Anwender eines Zuweisungsverfahrens von Interesse sein, die Kapazität eines Netzes unter Inkaufnahme von zusätzlichen interferenzbedingten Störungen zu steigern.

Nachteilig an den bekannten Auswahlkriterien ist somit, daß sie eine gewünschte Annäherung an einen theoretischen Maximalwert der Kapazität unter Beibehaltung einer Mindestqualität des Netzes nicht zu berücksichtigen vermögen.

Aufgabe der Erfindung ist die Schaffung eines Zuweisungsverfahrens mit solchen Auswahlkriterien, welches ein vorgegebenes Kapazitätserfordernis zu berücksichtigen vermag.

Die Aufgabe wird durch ein Verfahren der eingangs genannten Art gelöst, bei dem durch mögliche Zuweisungen verursachte Änderungen der Menge verbotener Zuweisungen von Frequenzen zu Sende- und/ oder Empfangseinrichtungen zwecks Auswahl der Frequenz und/oder Sende- und/ oder Empfangseinrichtung ermittelt werden.

Es wird also ein Verfahren mit folgenden Schritten durchgeführt:

a) (beliebige) Wahl einer möglichen Zuweisung einer Frequenz $f_h$ zu einer Sende-/Empfangseinrichtung $S/E_i$;
b) Ermittlung der Menge verbotener Zuweisungen, die durch eine Zuweisung von $f_h$ zu $S/E_i$ erstmals verursacht werden würden;
c) (beliebig häufige) Wiederholung der Schritte a) und b), um zwischen mehreren möglichen Zuweisungen ($f_h$ zu $S/E_i$) wählen zu können;
d) Verwendung der ermittelten Mengen als Kriterium zur Auswahl einer Teilmenge aus der Menge der gemäß Schritte a) und b) untersuchten möglichen Zuweisungen;
e) Auswahl einer Zuweisung aus der Teilmenge (soweit die Teilmenge mehr als eine Zuweisung beinhaltet).

Zwecks Wahrung einer Mindestqualität des Netzes müssen beispielsweise die Frequenzen, mit der eine Sende-/ Empfangseinrichtung sendet/ empfängt, (gemäß eines vom Anwender vorgegebenen Anforderungsprofils) genügend verschieden sein. Wird eine Frequenz $f_h$ einer Sende- und/ oder Empfangseinrichtung $S/E_i$ zugewiesen, so ist es aufgrund der vorgenannten Anforderung nicht mehr möglich, der Sende-/Empfangseinrichtung $S/E_i$ die Frequenzen zuzuweisen, die unzureichend verschieden von $f_h$ sind. Die Zuweisung einer unzureichend verschiedenen Frequenz stellt dann eine verbotene Zuweisung für die Sende-/ Empfangseinrichtung $S/E_i$ dar. Allgemein ist also unter einer verbotenen Zuweisung die Zuweisung einer bestimmten Frequenz zu einer bestimmten Sende-/ Empfangseinrichtung zu verstehen, die aufgrund einer Voraussetzung oder Vorgabe nicht vorgesehen ist.

Eine erlaubte Zuweisung einer Frequenz $f_h$ zu einer Sende-/ Empfangseinrichtung $S/E_i$ soll beispielsweise bewirken, daß im Netz $z_{h,i}$ Zuweisungen von Frequenzen zu Sendeund/ oder Empfangseinrichtungen erstmals nicht mehr erlaubt bzw. verboten sind ($z_{h,i} \in \{0, 1, 2, ...\}$). Die Zahl $z_{h,i}$ stellt dann ein quantitatives Maß für die Änderung der Menge verbotener Zuweisungen (infolge der Zuweisung von $f_h$ zu $S/E_i$) dar.

Unter möglicher Zuweisung ist zu verstehen, daß Zuweisungen in Betracht gezogen werden, die zwar erlaubt, aber (noch) nicht durchgeführt worden sind. Da verfahrensgemäß eine Mehrzahl von Änderungen der Menge zu ermitteln sind, im Ergebnis jedoch nur eine Frequenz ausgewählt und einer ausgewählten Sende- und/ oder Empfangseinrichtung zugewiesen wird, ist folglich verfahrensgemäß einer von mehreren Möglichkeiten der Vorzug zu geben.

Eine Ermittlung zwecks Auswahl liegt demnach vor, wenn die ermittelten Änderungen der Menge herangezogen werden, um mittelbar oder unmittelbar eine Zuweisung auszuwählen oder zumindest eine Eingrenzung auf bestimmte Zuweisungen vorzunehmen. Hierunter ist folglich nicht zu verstehen, daß die ermittelte Änderung alleiniges Auswahlkriterium sein muß, d. h. die Änderung der Menge kann eines von mehreren (evtl. kumulativ) angewendeten Kriterien sein, um eine Zuweisung auszuwählen.

Änderungen der Menge verbotener Zuweisungen verfahrensgemäß als Auswahlkriterium heranzuziehen, bewirkt folglich, daß die Anzahl zugewiesener bzw. zuweisbarer Frequenzen im Netz vom Anwender problemlos gesteuert werden kann. Folglich steht dem Anwender somit ein Verfahren zur Erfüllung kapazitiver Vorgaben zur Verfügung. Es kann dem Durchschnittsfachmann überlassen bleiben, wie er das Auswahlkriterium zweckmäßig zur Erreichung eines gewünschten Ziels einsetzt.

Wird anstelle einer Frequenz ein Frequenzband mittels der beanspruchten Maßnahmen ausgewählt, so liegt zumindest eine äquivalente Benutzung des Verfahrens vor.

Vorteilhaft erfolgt eine Anwendung des Verfahrens in folgender Weise:

Zunächst wird für eine mögliche Zuweisung einer Frequenz $f_h$ zu einer Sende-/Empfangseinrichtung $S/E_i$ die Anzahl $z_{h,i}$ der hierdurch erstmals verursachten verbotenen Zuweisungen berechnet. Für jede mögliche Zuweisung $f_h$ zu $S/E_i$ wird die Anzahl $z_{h,i}$ ermittelt. Die Menge der ermittelten Werte $z_{h,i}$ enthält einen Minimalwert $z_{min}$. Somit gibt es eine oder mehrere Zuweisungen $f_h$ zu $S/E_i$, die eine minimale Anzahl $z_{min}$ verbotener Zuweisungen verursachen.

Es können nun diejenigen Zuweisungen $f_h$ zu $S/E_i$ (als vorteilhaft) ausgewählt werden, deren ermittelte Werte $z_{h,i}$ die minimale Anzahl $z_{min}$ um nicht mehr als einen bestimmten Prozentsatz überschreiten. Es werden dann folglich nur noch solche Zuweisungen durchgeführt werden, die die Kapazität des Netzes (im Vergleich zu einem theoretischen Maximalwert) nur bis zu einem bestimmten Grad vermindern.

In Verbindung mit dem aus DE 43 02 228 A1 bekannten Verfahren bewirkt eine kleine Prozentzahl (Prozentsatz) eine Erhöhung der Kapazität zu Lasten des Interferenzpreises bzw. eine große Prozentzahl eine Verkleinerung des Interferenzpreises zu Lasten der Kapazität.

Diese Anwendungsweise des Verfahrens berücksichtigt also den Kapazitätsbedarf eines Netzes. Nachteilhaft an dieser Vorgehensweise ist jedoch, daß der Kapazitätsbedarf nur undifferenziert beachtet wird. Es werden beispielsweise keine regionalen Unterschiede bezüglich der erforderlichen Auslastung des Netzes berücksichtigt. So wird in Ballungsräumen (im allgemeinen handelt es sich hierbei um Großstädte) stärker auf die Erreichung der theoretisch maximal möglichen Kapazität geachtet werden müssen, als dies außerhalb der Ballungsräume (z. B. in ländlichen Gebieten) der Fall sein wird.

Es ist daher vorteilhaft, die ermittelten Änderungen zwecks Auswahl der Frequenz oder der Sende-/ Empfangseinrichtung zu wichten. Es kann dabei im einzelnen dem Fachmann überlassen bleiben, in welcher Weise er eine zweckmäßige Wichtung (des Auswahlkriteriums) insbesondere zur Berücksichtigung spezifischer regionaler Kapazitätserfordernisse vornimmt.

Um spezifische regionale Kapazitätserfordernisse zu berücksichtigen, ist es vorteilhaft, in Abhängigkeit von Verhältnissen Restkapazität zu Restbedarf zu wichten.

Die Restkapazität einer Sende- und/ oder Empfangseinrichtung ist die Anzahl von Frequenzen, die dieser Sende- und/ oder Empfangseinrichtung noch gemeinsam zugewiesen werden könnten. Diese kann geschätzt oder näherungsweise berechnet werden. Ein quantitatives Maß für die Restkapazität anstelle der Restkapazität verfahrensgemäß einzusetzen, stellt eine gleichwirkende Maßnahme dar.

Der Restbedarf einer Sende- und/ oder Empfangseinrichtung ist die Anzahl der Frequenzen, die der Sende- und/ oder Empfangseinrichtung noch zugewiesen werden sollen.

Es ist folglich vorteilhaft, in einer Region mit Sende-/ Empfangseinrichtungen, denen beispielsweise jeweils noch n Frequenzen ($n \in \{1, 2, .. \}$) zugewiesen werden sollen (Restbedarf) und bei denen jedoch nur noch 2*n benachbarte Frequenzen je Sende-/Empfangseinrichtung möglich sind (quantitatives Maß für die Restkapazität), stärker verfahrensgemäß auf Erreichung einer großen Kapazität zu achten (z. B.: Wichtung durch Wahl einer kleinen Prozentzahl gemäß vorbeschriebener Anwendungsweise), als in einer Region mit Sende-/ Empfangseinrichtungen, denen jeweils noch n Frequenzen zugewiesen werden sollen und bei denen noch 3*n benachbarte Frequenzen je Sende-/Empfangseinrichtung möglich sind (dann z. B.: Wichtung durch Wahl einer großen Prozentzahl).

Eine besonders vorteilhafte Wichtungsweise wird im Rahmen der nun folgenden (dynamischen) Anwendungsweise des Verfahrens beschrieben. Diese Verfahrensweise bewertet selbständig, an welchen Sende-/Empfangseinrichtungen auf Erreichung einer hohen Kapazität geachtet bzw. nicht geachtet werden muß.

{Verbote($f_h$ zu $S/E_i$)} sei die Menge der Zuweisungen von Frequenzen zu Sende-/Empfangseinrichtungen, die nach einer Zuweisung von $f_h$ zu $S/E_i$ erstmals verboten wären.

{Verbote($f_h$ zu $S/E_i$, $S/E_j$)} sei die Menge der Zuweisungen von Frequenzen zur Sende- und/ oder Empfangseinrichtung $S/E_j$, die nach einer Zuweisung von $f_h$ zu $S/E_i$ erstmals verboten wären.

Der Steuerungsfaktor sei eine positive reelle Zahl größer 1. Ein optimaler Steuerungsfaktor kann durch Versuche ermittelt werden. In einer konkreten Anwendung hat sich der Steuerungsfaktor 4 bewährt.

Der externe Restbedarf einer Sende- und/ oder Empfangseinrichtung S/E sei die Summe der Restbedarfszahlen derjenigen anderen Sende-/ Empfangseinrichtungen, die nicht die gleichen Frequenzen wie S/E benutzen dürfen.

Die gewichtete Anzahl der Elemente in {Verbote($f_h$ zu $S/E_i$, $S/E_j$)} soll 0 sein, falls die Restkapazität von $S/E_j$ größer gleich dem Produkt aus dem Steuerungsfaktor und dem Restbedarf von $S/E_j$ ist. Sie soll gleich dem Wert:

$$((\text{Steuerungsfaktor} * \text{Restbedarf}(S/E_j) - \text{Restkapazität}(S/E_j)) / ((\text{Steuerungsfaktor} - 1) *$$

$$\text{Restbedarf}(S/E_j))) * (\text{Anzahl der Elemente in } \{\text{Verbote}(f_h \text{ zu } S/E_i, S/E_j)\}) * ((\text{externer}$$

$$\text{Restbedarf}(S/E_j) + 1) / (\text{Restkapazität}(S/E_j) - \text{Restbedarf}(S/E_j) + 1))$$

sein, wenn die Restkapazität von $S/E_j$ kleiner als das Produkt aus Steuerungsfaktor und Restbedarf von $S/E_j$, aber größer gleich dem Restbedarf von $S/E_j$ ist. Sie soll gleich dem Wert:

$$(\text{Anzahl der Elemente in } \{\text{Verbote}(f_h \text{ zu } S/E_i, S/E_j)\}) * (\text{externer Restbedarf}(S/E_j) + 1)$$

sein, wenn die Restkapazität von $S/E_j$ kleiner als der Restbedarf von $S/E_j$ ist.

Die gewichtete Anzahl der Elemente in {Verbote($f_h$ zu $S/E_i$)} ist nun die Summe über alle gewichteten Anzahlen der Elemente in {Verbote($f_h$ zu $S/E_i$, $S/E_j$)} für alle Sende-/Empfangseinrichtungen $S/E_j$.

Für jede mögliche Zuweisung kann diese gewichtete Anzahl der Elemente in {Verbote($f_h$ zu $S/E_i$)} ermittelt werden. Unter den möglichen Zuweisungen wird es mindestens eine mit einer minimalen gewichteten Anzahl der Elemente in {Verbote($f_h$ zu $S/E_i$)} geben.

Je nach Ziel des Funknetzplaners können nun alle diejenigen Zuweisungen als vorteilhaft angesehen werden, deren gewichtete Anzahl der Elemente in {Verbote($f_h$ zu $S/E_i$)} die minimal mögliche um nicht mehr als eine bestimmte Prozentzahl überschreitet. Diese Prozentzahl kann vom Funknetzplaner als Eingangsinformation vor dem Start des Verfahrens eingegeben werden.

In der Praxis hat es sich bewährt, die Prozentzahl restriktiv zu wählen. Beste Ergebnisse wurden mit einem Wert von Null erreicht, d. h. nur diejenigen Zuweisungen waren als vorteilhaft anzusehen, die die minimal mögliche gewichtete Anzahl an Verboten bewirkten.

Die Ermittlung einer Restkapazität kann zu einer analytisch unlösbaren mathematischen Problemstellung führen. Insbesondere in derartigen Fällen sollte die Restkapazität nur näherungsweise berechnet oder geschätzt werden.

Integriert man das erfindungsgemäße Verfahren in das Verfahren aus DE 43 02 228 A1, so stellt sich heraus:

(1) Eine große Prozentzahl führt bei einer Anwendung des Verfahrens ohne Wichtungsfaktoren erwartungsgemäß zum Ergebnis des aus DE 43 02 228 A1 bekannten Standes der Technik, d.h. Optimierung der Qualität des Netzes.
(2) Eine kleine Prozentzahl, z. B. 0 %, führt bei einer Anwendung des Verfahrens ohne Wichtungsfaktoren zu einer Steigerung der Kapazität im Vergleich zum Stand der Technik gemäß DE 43 02 228 A1 zu Lasten der Qualität.
(3) Die zuletzt beschriebene gewichtete Anwendungsweise mit Prozentzahl 0% führt zu Frequenzplänen, deren Kapazität fast so gut wie im Fall (2) und deren Qualität fast so gut wie im Fall (1) ist.

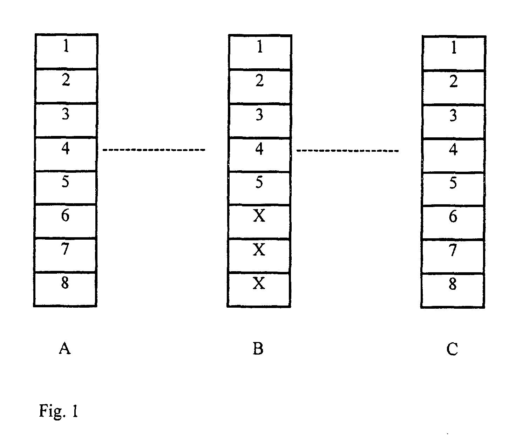

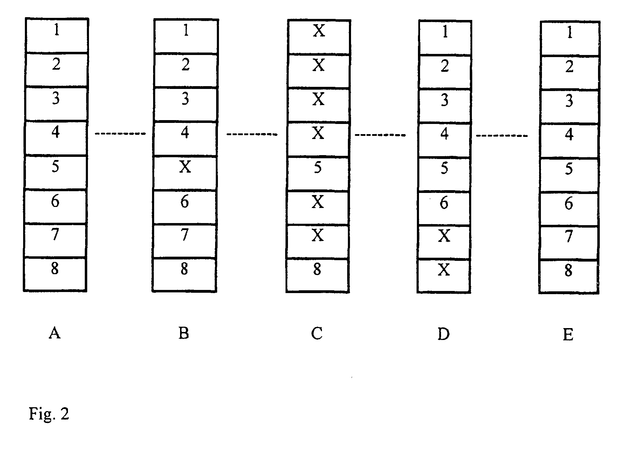

Ein spezielles Ausführungsbeispiel wird anhand der folgenden Beschreibung sowie der Figuren 1 und 2 erläutert.

Fig. 1 zeigt die Diagrammdarstellung eines Funknetzes mit drei Sende- und Empfangseinrichtungen A, B und C sowie mit den möglichen Frequenzen 1 bis 8.

Fig. 2 zeigt die Diagrammdarstellung eines weiteren Netzes mit fünf Sende- und Empfangseinrichtungen A bis E sowie mit den möglichen Frequenzen 1 bis 8.

Gegeben sei das in Fig. 1 dargestellte Funknetz mit den drei Sende- und/ oder Empfangseinrichtungen A, B und C. Zulässige Frequenzen seien 1, 2, 3, 4, 5, 6, 7 und 8. A und B dürfen keine gleichen Frequenzen benutzen und B und C dürfen keine gleichen Frequenzen benutzen. Aufgrund von technischen Randbedingungen (Combiner-Bedingungen) müssen zwei an einer Sende-/ Empfangseinrichtung eingesetzte Frequenzen einen zahlenmäßigen Abstand von mindestens 3 haben, der Einsatz der Frequenz 5 verbietet also den Einsatz der Frequenzen 3 und 4 sowie 6 und 7 an der gleichen Sende-/Empfangseinrichtung. In unserem Beispiel seien die Frequenzen 6, 7 und 8 an der Sende-/ Empfangseinrichtung B bereits verboten. In Fig. 1 sind im Kästchenraster noch zulässige Frequenzen an einer Sende-/ Empfangseinrichtung durch ihre Zahl dargestellt, bereits verbotene Frequenzen durch ein X. Eine Verbindungslinie zwischen den Kästchenrastern soll das Verbot der Benutzung von gleichen Frequenzen zwischen den Sende-/ Empfangseinrichtungen symbolisieren.

Es folgen vier beispielhafte Mengen verbotener Zuweisungen (eine verbotene Zuweisung sei symbolisiert durch $<f_v$ zu $S/E_k>$), verursacht durch eine mögliche Zuweisung ($f_h$ zu $S/E_i$):

- {Verbote(3 zu B)} = {<3 zu A>, <3 zu C>, <1 zu B>, <2 zu B>, <4 zu B>, <5 zu B>};
- {Verbote(4 zu A)} = {<4 zu B>, <2 zu A>, <3 zu A>, <5 zu A>, <6 zu A>};
- {Verbote(5 zu B)} = {<5 zu A>, <5 zu C>, <3 zu B>, <4 zu B>};
- {Verbote(8 zu C)} = {<6 zu C>, <7 zu C>}.

Durch die möglichen Zuweisungen (8 zu A) und (8 zu C) würden jeweils zwei verbotene Zuweisungen (Verbote) verursacht. Jeweils drei Verbote würden die möglichen Zuweisungen (7 zu A), (7 zu C), (1 zu A) und (1 zu C) zur Folge haben. Jeweils vier Verbote würden durch (6 zu A), (6 zu C), (5 zu B), (2 zu A), (2 zu C) und (1 zu B) erzeugt. Alle anderen Zuweisungen würden eine noch größere Anzahl an Verboten bewirken.

Die minimal mögliche Anzahl verursachter Verbote durch Zuweisung einer Frequenz zu einer Sende-/Empfangseinrichtung beträgt also zwei. Bei einem Prozentsatz von 50% (vgl. erste vorgenannte Anwendungsweise) werden alle Zuweisungen, deren Anzahl an verursachten Verboten kleiner gleich drei ist, als vorteilhaft und auswählbar angesehen. Bei 100% werden alle Zuweisungen, deren Anzahl kleiner gleich vier ist, als vorteilhaft und auswählbar angesehen.

Aus der Teilmenge (8 zu A) und (8 zu C) ist nun eine auszuwählen und diese ausgewählte Zuweisung ist durchzuführen.

Ein anderes, in Fig. 2 dargestelltes Netz bestehe aus den fünf Sende- und/ oder Empfangseinrichtungen A, B, C, D und E mit folgender Ausgangssituation:

Zur Berechnung der Restkapazität der einzelnen Sende-/ Empfangseinrichtungen wird zunächst die niedrigstnumerierte zuweisbare Frequenz gespeichert. Es wird dann die nächstniedrigste Frequenz ermittelt und gespeichert, die nach einer Zuweisung der vorher gespeicherten Frequenz noch zulässig wäre usw. Die Anzahl der so gespeicherten Frequenzen ist die Restkapazität.

In unserem Beispiel ist die Restkapazität von A gleich 3, von B gleich 3, von C gleich 2, von D gleich 2 und von E gleich 3.

Der Restbedarf von A sei 1, der von B sei 2, der von C sei 1, der von D sei 2 und der von E sei 2. Damit ergibt sich für A ein externer Restbedarf von 2, für B von 2, für C von 4, für D von 3 und für E von 2.

Es wird die gewichtete Anzahl der Verbote infolge der möglichen Zuweisung (5 zu C) und der möglichen Zuweisung (8 zu C) bei einem Steuerungsfaktor 4 berechnet.

Es ist {Verbote(5 zu C)} = {<5 zu D>} = {Verbote(5 zu C, D)} sowie {Verbote(8 zu C)} = {<8 zu B>} = {Verbote (8 zu C, B)}.

Da die Restkapazität von D gleich dem Restbedarf von D ist, ergibt sich als gewichtete Anzahl der Elemente in {Verbote(5 zu C, D)}:

$$((\text{Steuerungsfaktor} * \text{Restbedarf(D)} - \text{Restkapazität(D)}) / ((\text{Steuerungsfaktor} - 1) *$$

$$\text{Restbedarf(D)})) * (\text{Anzahl der Elemente in \{Verbote(5 zu C, D)\}}) * ((\text{externer Rest-}$$

$$\text{bedarf (D)} + 1) / (\text{Restkapazität(D)} - \text{Restbedarf(D)} + 1)) = ((4 * 2 - 2) / (3 * 2)) * 1$$

$$* ((3 + 1)/(2-2+1))=4.$$

Da die Restkapazität von B größer als der Restbedarf von B aber kleiner als 4 * Restkapazität von B, ergibt sich als gewichtete Anzahl der Elemente in {Verbote(8 zu C, B)}:

$$((\text{Steuerungsfaktor} * \text{Restbedarf(B)} - \text{Restkapazität(B)}) / ((\text{Steuerungsfaktor} - 1) *$$

$$\text{Restbedarf(B)})) * (\text{Anzahl der Elemente in \{Verbote(5 zu C, B)\}}) * ((\text{externer Restbe-}$$

darf (B) + 1)/(Restkapazität(B) - Restbedarf(B) + 1)) = ((4 * 2 - 3)/(3 * 2)) * 1 *

((2 + 1) / (3 - 2 + 1)) = (5/6) * 1 * (3 / 2) = 15 / 12 = 1,25.

Da {Verbote(5 zu C)}= {Verbote(5 zu C,D)} ist, ist die gewichtete Anzahl der Elemente in {Verbote(5 zu C)} gleich 4. Da {Verbote(8 zu C)} = {Verbote(8 zu C,B)} ist, ist die gewichtete Anzahl der Elemente in {Verbote(8 zu C)} gleich 1,25. Damit erscheint die Zuweisung (8 zu C) als wesentlich vorteilhafter. Ohne Wichtung hätten beide Zuweisungen die Anzahl 1 erreicht und wären als gleichwertig anzusehen gewesen. Es ist daher die Frequenz 8 der Sende-/ Empfangseinrichtung C zuzuweisen.

## Patentansprüche

1.  Verfahren zur Zuweisung einer Frequenz zu einer Sende- und/ oder Empfangseinrichtung eines Funknetzes charakteriziert durch die Schritte:

    a) Wahl einer möglichen Zuweisung einer Frequenz zu einer Sende- und/oder Empfangseinrichtung,
    b) Ermittlung der Menge verbotener Zuweisungen, die durch die gemäß vorhergehendem Schritt gewählte mögliche Zuweisung erstmals verursacht werden würden,
    c) ein- oder mehrfache Wiederholung der beiden vorhergehenden Schritte,
    d) Verwendung der nach den vorhergehenden Schritten ermittelten Mengen als Kriterium zur Auswahl einer Teilmenge aus der Menge der untersuchten möglichen Zuweisungen,
    e) Auswahl einer Zuweisung aus der gemäß vorhergehendem Schritt ermittelten Teilmenge, falls die Teilmenge mehr als eine Zuweisung beinhaltet.

2.  Verfahren nach vorhergehendem Anspruch,
    **dadurch gekennzeichnet, daß**
    die gemäß Schritte a) und b) ermittelte durch mögliche Zuweisungen verursachte Änderung der Menge verbotener Zuweisungen zwecks Auswahl der Frequenz und/oder Sende-/Empfangseinrichtung gewichtet wird.

3.  Verfahren nach vorhergehendem Anspruch,
    **dadurch gekennzeichnet, daß**
    abhängig vom Verhältnis Restkapazität zu Restbedarf der Sende-/Empfangseinrichtungen gewichtet wird.

## Claims

1.  Method for the allocation of a frequency to a transmitting and/or receiving device of a radio network, **characterised by** the steps of:

    a) selection of a possible allocation of a frequency to a transmitting and/or receiving device,
    b) determination of the set of prohibited allocations which would be caused for the first time by the possible allocation selected according to the preceding step,
    c) repetition of the two preceding steps one or more times,
    d) use of the sets determined according to the preceding steps as a criterion for the selection of a subset from the set of possible allocations examined,
    e) selection of an allocation from the subset determined according to the preceding step if the subset contains more than one allocation.

2.  Method according to the preceding claim, **characterised in that** the alteration of the set of prohibited allocations determined according to steps a) and b) and caused by possible allocations is weighted for the purpose of selection of the frequency and/or transmitting/receiving device.

3.  Method according to the preceding claim, **characterised in that** weighting is effected as a function of the ratio of residual capacity to residual requirements of the transmitting/receiving devices.

**Revendications**

1. Procédé pour attribuer une fréquence à un émetteur et/ou récepteur d'un réseau radio, **caractérisé par** les étapes suivantes :

   a) choix d'une attribution possible d'une fréquence à un émetteur et/ou récepteur,
   b) recherche de la quantité d'attributions interdites qui seraient provoquées pour la première fois par l'attribution possible choisie selon l'étape précédente,
   c) reprise, une ou plusieurs fois, des deux étapes précédentes,
   d) utilisation des quantités déterminées selon les étapes précédentes, comme critère pour sélectionner une quantité partielle dans la quantité d'attributions possibles examinées,
   e) sélection d'une attribution dans la quantité partielle déterminée selon l'étape précédente, au cas où la quantité partielle contient plus d'une attribution.

2. Procédé selon la revendication précédente, **caractérisé en ce que** la modification, déterminée selon les étapes a) et b) et provoquée par des attributions possibles, de la quantité d'attributions interdites est pondérée en vue de la sélection de la fréquence et/ou de l'émetteur/récepteur.

3. Procédé selon la revendication précédente, **caractérisé en ce que** la pondération est fonction du rapport de la capacité restante sur la demande restante des émetteurs/récepteurs.

| A | | B | | C |
|:-:|:-:|:-:|:-:|:-:|
| 1 | | 1 | | 1 |
| 2 | | 2 | | 2 |
| 3 | | 3 | | 3 |
| 4 | - - - - - - | 4 | - - - - - - | 4 |
| 5 | | 5 | | 5 |
| 6 | | X | | 6 |
| 7 | | X | | 7 |
| 8 | | X | | 8 |

A          B          C

Fig. 1

Fig. 2